# EUROPÄISCHE PATENTSCHRIFT

(11) **EP 0 833 068 B1**
(45) Veröffentlichungstag und Bekanntmachung des Hinweises auf die Patenterteilung: **13.08.2003**
(21) Anmeldenummer: 96115639.5
(22) Anmeldetag: 30.09.1996
(51) Int. Cl.: F16C 1/00, F16C 33/10, F01C 21/02

(54) **Gleitlager für eine Zahnradpumpe**
Slide bearing for a gear pump
Palier à contact lisse pour une pompe à engrenages

(43) Veröffentlichungstag der Anmeldung: 01.04.1998
(60) Teilanmeldung: 02005608.1
(73) Patentinhaber: Maag Pump Systems Textron AG, 8023 Zürich (CH)
(72) Erfinder: Blume, Peter, CH-8057 Zürich (CH); Seekirchner, Gregor, CH-8405 Winterthur (CH)
(74) Vertreter: Troesch Scheidegger Werner AG

(56) Entgegenhaltungen:
- EP-A- 0 620 368
- DE-A- 2 005 740
- DE-C- 832 968
- GB-A- 1 275 252

## Beschreibung

Die vorliegende Erfindung betrifft ein Gleitlager nach dem Oberbegriff des Patentanspruchs 1 sowie eine Zahnradpumpe mit einem derartigen Gleitlager.

Bekanntermassen werden Gleitlager für Zahnradpumpen oft durch das geförderte Medium geschmiert, denn es kann davon ausgegangen werden, dass aufgrund der Exzentrizität der Welle im Gleitlager, welche zu einer erhöhten Spaltbreite auf der Nichtlastseite des Gleitlagers führt, und aufgrund eines über dem Gleitlager anliegenden Differenzdruckes der Zutritt des Fördergutes in das Gleitlager gewährleistet ist und somit die im Gleitlager geführte Welle ausreichend geschmiert wird.

Für höherviskos fliessendes Fluid kann der Zutritt ins Gleitlager und die Verteilung über die Lagerbreite durch eine Schmiernut erleichtert werden, wie dies beispielsweise in EP-0 620 368 beschrieben wurde.

Aus der DE-832 968 ist des weiteren ein Gleitlager der eingangs genannter Art bekannt, das Schmiernuten aufweist, wobei sowohl Nuten zum Zuführen von Schmiermittel als auch Nuten zum Ableiten von gebrauchtem Schmiermittel vorgesehen sind. Darüber hinaus offenbart diese Druckschrift, dass die Zuführnut, die im Bereich jener Kante, die in bezug auf die Wellendrehrichtung als Eintrittskante für Schmiermittel in den Schlitz zwischen Gleitlager und Welle wirkt, derart ausgebildet ist, dass eine Nuttangente an die Schmiernut in einem Eckpunkt zwischen Schmiernut und Zylindermantel der Gleitlagerbohrung mit einer Bohrungstangente an den Zylindermantel im Eckpunkt einen Winkel einschliesst, der flach auslaufend ausgebildet ist.

Fluide mit unbekanntem elastischem Verhalten weisen oft den Nachteil auf, dass der Fluiddruck in der Schmiernut ungenügend ist, damit die Schmierflüssigkeit, d.h. das Fördergut, in den Spalt zwischen Gleitlager und Welle eingezogen wird.

Der vorliegenden Erfindung liegt daher die Aufgabe zugrunde, ein Gleitlager anzugeben, bei dem eine genügende Schmierung, insbesondere auch bei einem höherviskos fliessenden Fluid, gewährleistet ist.

Diese Aufgabe wird durch die im kennzeichnenden Teil des Patentanspruchs 1 angegebenen Massnahmen gelöst. Vorteilhafte Ausgestaltungen der Erfindung sowie eine Zahnradpumpe sind in weiteren Ansprüchen angegeben.

Die Erfindung weist folgende Vorteile auf: Durch ein flaches Ausbilden der Eintrittskante, über die Schmiermedium, d.h. Fördermedium, unmittelbar in den Schlitz zwischen Gleitlager und Welle gelangt, verbleibt dem Fördermedium genügend Zeit, um die Dehnspannungen, welche sich aufgrund der Querschnittsänderungen und der Erfüllung der Kontinuitätsgleichung ergeben, hinreichend abzubauen und damit den elastizitätsbedingten Zusatzdruckbedarf zu reduzieren. Dies ist allgemein, insbesondere bei cellulosehaltigen Fördermedien, von grossem Vorteil.

Die Erfindung wird nachfolgend anhand von Zeichnungen beispielsweise näher erläutert. Dabei zeigt
- Fig. 1: eine Abwicklung eines erfindungsgemässen Gleitlagers und
- Fig. 2: einen Schnitt durch die Lagerbohrung des erfindungsgemässen Gleitlagers.

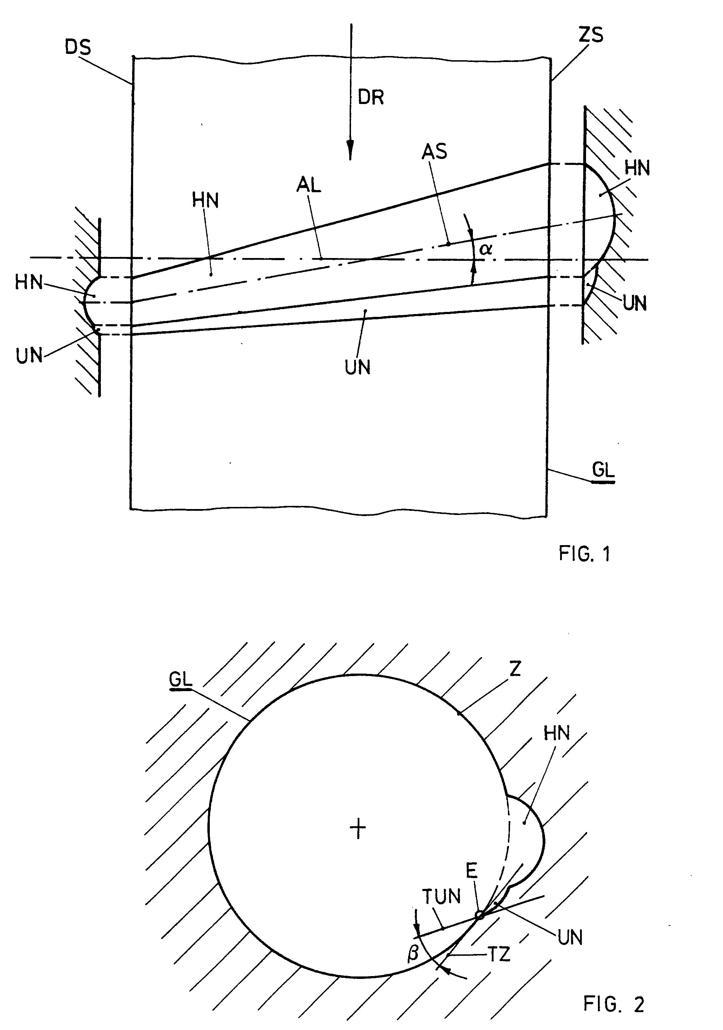

In Fig. 1 ist ein erfindungsgemässes Gleitlager GL abgewickelt auf einer Ebene dargestellt, wobei seitlich zwei Seitenansichten des Gleitlagers GL gezeigt sind. In die Oberfläche des Gleitlagers GL ist eine Ausnehmung in Form einer Nut, insbesondere - wie in Fig. 1 dargestellt-ausgebildet als Hauptnut HN und Übergangsnut UN, wobei die Hauptnut HN und die Übergangsnut UN ineinander laufend ausgebildet sind und wobei die Hauptnut HN grösser ist als die Übergangsnut UN. Ferner weisen die Hauptnut HN und die Übergangsnut UN auf der Zahnradseite ZS grössere Tiefen auf als auf der entsprechenden Dichtungsseite DS und, wie in Fig. 1 ersichtlich, erfolgt der Übergang von der maximalen zur minimalen Tiefe stetig. Wie der eben erwähnte stetige Übergang in bezug auf die Nuttiefen erfolgt in gleicher Weise auch ein stetiger Übergang in bezug auf die Änderung der Nutbreiten. Demzufolge ändert sich die Querschnittsfläche gebildet durch die Hauptnut HN und die Übergangsnut UN ebenfalls stetig, und zwar wird die Querschnittfläche ausgehend von der Zahnradseite ZS in Richtung Dichtungsseite DS stetig kleiner.

Wie in Fig. 1 dargestellt und als bevorzugte Ausführungsform der Erfindung angegeben, schliesst die Achse AL des Gleitlagers GL mit der Achse AS der Schmiernut, d.h. der Hauptnut HN und der Übergangsnut UN, einen Winkel α ein. Dieser Winkel α wird durchwegs kleiner als 45° - bevorzugterweise gleich 30° - gewählt. Dabei, wie auch aus Fig. 1 ersichtlich, ist die Schmiernutneigung gegenüber der Gleitlagerachse AL derart gerichtet, dass die Schmiernut in Drehrichtung der Welle gesehen zahnradseitig ZS eher beginnt als dichtungsseitig DS.

Die Nuttiefen der Hauptschmiernut HN und der Übergangsnut UN können sowohl standardmässig für Fluidklassen, wie beispielsweise Polyolefine, als auch individuell ausgeführt werden. Bevorzugt wird eine gegenüber dem Eintrittsquerschnitt deutlich verringerte Austrittsquerschnittsfläche, um die Gleitlagerleckage gering zu halten. Denkbar ist auch, dass aufgrund des zu förderden Fluids die Schmiernut oder zumindest ein Teil davon, d.h. die Hauptnut HN und/oder die Übergangsnut UN, im Gleitlager GL enden, d.h., dass die Schmiernut nicht vollständig von der Zahnseite ZS zur Dichtungsseite DS läuft.

Für eine präzise Erläuterung der bevorzugten Ausführungsform der vorliegenden Erfindung wurde die Schmiernut in eine Hauptnut HN und eine Übergangsnut UN aufgeteilt. Tatsächlich handelt es sich allerdings um eine einzige Nut, die bevorzugterweise derart ausgebildet ist, dass deren Eintrittskante in den Schlitz zwischen Gleitlager und Welle in bezug zur Wellendrehrichtung flach ausgebildet ist.

In Fig. 2 ist ein Querschnitt durch das erfindungsgemässe Gleitlager GL dargestellt, wobei die in einen zylinderförmigen Mantel Z des Gleitlagers GL eingeformten Haupt- und Übergangsnut HN bzw. UN deutlich erkennbar sind. Bei dieser dargestellten Ausführungsform der Erfindung sind die Hauptnut HN und die Übergangsnut UN kreiszylinderförmig ausgebildet, womit ein einfaches Anbringen der Schmiernut im Gleitlager GL ermöglich wird. Die erwähnte flache Ausgestaltung der Schmiernut wird bei der in Fig. 2 dargestellten Ausführungsform beispielsweise dadurch erreicht, dass eine Nuttangente TUN an die Übergangsnut UN in einem Eckpunkt E zwischen Übergangsnut UN und Zylindermantel Z mit einer Bohrungstangente TZ an den Zylindermantel Z im besagten Eckpunkt E einen Winkel β einschliesst, der kleiner als 30°, bevorzugterweise kleiner als 15° ist. Diese Winkelangaben beziehen sich auf einen Schnitt durch das zahnradseitige ZS Lagerende des Gleitlagers GL, weshalb die Winkelgrösse für den Winkel β, insbesondere bei abnehmender Querschnittsfläche der Schmiernut in Richtung Dichtungsseite DS, über die Gleitlagerbreite zur Dichtungsseite DS hin ebenfalls kleiner wird.

## Patentansprüche

1. Gleitlager (GL) für eine Zahnradpumpe die ein Zahnrad und eine Dichtung aufweist mit einer Schmiernut (HN, UN), die im Bereich jener Kante, die in Bezug auf eine Wellendrehrichtung als Eintrittskante für Schmiermedium in den Schlitz zwischen Gleitlager (GL) und Welle wirkt, flach auslaufend ausgebildet ist,
**dadurch gekennzeichnet, dass** die Schmiernut (HN, UN) auf der zahnradseitig (ZS) einbanbaren Seite eine grössere Querschnittsfläche aufweist als auf der dichtungsseitig (DS) einbanbaren Seite.

2. Gleitlager (GL) nach Anspruch 1, **dadurch gekennzeichnet, dass** die Schmiernut (HN, UN) im wesentlichen
nichtlastseitig vorgesehen ist.

3. Gleitlager nach Anspruch 1 oder 2, **dadurch**
**gekennzeichnet, dass** die Schmiernut (HN, UN) von der Zahnradseite (ZS) bis zur Dichtungsseite (DS) führt.

4. Gleitlager nach einem der vorangehenden Ansprüche,
**dadurch gekennzeichnet, dass** die Schmiernut (HN, UN) zahnradseitig (ZS) in Drehrichtung (DR) gesehen eher beginnt als dichtungsseitig (DS).

5. Gleitlager nach einem der vorangehenden Ansprüche, **dadurch gekennzeichnet, dass** die Querschnittsfläche der Schmiernut (HN, UN) von der Eintrittskante bis zum Ende stetig abnimmt.

6. Gleitlager nach einem der vorangehenden Ansprüche, **dadurch gekennzeichnet, dass** ein zwischen der Gleitlagerachse (AL) und der Schmiernutachse (AS) liegender Winkel (α) kleiner als 45°, vorzugsweise gleich 30° ist.

7. Gleitlager nach einem der vorangehenden Ansprüche, **dadurch gekennzeichnet, dass** die Schmiernut aus einer Hauptnut (HN) und einer Übergangsnut (UN) besteht, wobei die Übergangsnut (UN) im Bereich der Eintrittskante angeordnet ist.

8. Gleitlager nach Anspruch 7, **dadurch gekennzeichnet, dass** die Übergangsnut (UN) und die Hauptnut (HN) kreiszylinderförmig ausgebildet sind und dass eine Nuttangente (TUN) an die Übergangsnut (UN) in einem Eckpunkt (E) zwischen Übergangsnut (UN) und Zylindermantel (Z) der Gleitlagerbohrung mit einer Bohrungstangente (TZ) an den Zylindermantel (Z) im Eckpunkt (E) einen Winkel β einschliesst, der zumindest zahnradseitig kleiner als 30°, bevorzugterweise kleiner als 15° ist.

9. Gleitlager nach Anspruch 7 oder 8, **dadurch gekennzeichnet, dass** der Winkel β über die Lagerbreite von der Zahnradseite (ZS) zur Dichtungsseite (DS) hin abnimmt.

10. Zahnradpumpe mit einem Gleitlager (GL) nach einem der Ansprüche 1 bis 9 zur Förderung von hochviskos fliessenden Fluiden, insbesondere von cellulosehaltigen Flüssigkeiten.

## Claims

1. Slide bearing (GL) for a gear pump which has a gear wheel and a seal, with a lubricating groove (HN, UN) which is designed with a flat runout in the area of the edge which, in relation to the shaft rotation direction, acts as the inlet edge for the lubricant into the slot between the slide bearing (GL) and the shaft, **characterised in that** the lubricating groove (HN, UN) has a larger cross-section area on the side which can be fitted on the gear wheel side (ZS) than on the side which can be fitted on the seal side (DS).

2. Slide bearing (GL) according to claim 1, **characterised in that** the lubricating groove (HN, UN) is essentially provided on the non-load side.

3. Slide bearing according to claim 1 or 2, **characterised in that** the lubricating groove (HN, UN) leads from the gear side (ZS) to the seal side (DS).

4. Slide bearing according to any of the previous claims, **characterised in that** the lubricating groove (HN, UN) begins earlier on the gear wheel side (ZS) than on the seal side (DS) viewed in the direction of rotation (DR).

5. Slide bearing according to any of the previous claims, **characterised in that** the cross-section area of the lubricating groove (HN, UN) diminishes steadily from the inlet edge to the end.

6. Slide bearing according to any of the previous claims, **characterised in that** an angle (α) lying between the slide bearing axis (AL) and the lubricating groove axis (AS) is less than 45°, preferably equal to 30°.

7. Slide bearing according to any of the previous claims, **characterised in that** the lubricating groove consists of a main groove (HN) and a transitional groove (UN), where the transitional groove (UN) is arranged in the area of the inlet edge.

8. Slide bearing according to claim 7, **characterised in that** the transitional groove (UN) and the main groove (HN) are formed circular cylindrical and that a groove tangent (TUN) at the transitional groove (UN), at a corner point (E) between the transitional groove (UN) and the cylinder casing (Z) of the slide bearing bore, encloses with a bore tangent (TZ) to the cylinder casing (Z) at the comer point (E) an angle (β) which at least on the gear wheel side is less than 30°, preferably less than 15°.

9. Slide bearing according to claim 7 or 8, **characterised in that** the angle (β) diminishes over the bearing width from the gear wheel side (ZS) to the seal side (DS).

10. Gear pump with a slide bearing (GL) according to any of claims 1 to 9 to transport highly viscous liquids, in particular cellulose-containing liquids.

## Revendications

1. Roulement coulissant (GL) pour une pompe à engrenages ayant une roue d'engrenages et un joint d'étanchéité, avec une rainure de lubrification (HN, UN) conçue avec un faux-rond plat au niveau de l'arête qui, par rapport au sens de rotation de l'arbre, tient lieu d'arête d'entrée pour le lubrifiant dans la fente entre le roulement coulissant (GL) et l'arbre, **caractérisé en ce que** la rainure de lubrification (HN, UN) présente une section plus importante du côté qui peut être installé côté roue d'engrenages (ZS) que du côté qui peut être installé côté joint d'étanchéité (DS).

2. Roulement coulissant (GL) selon la revendication 1, **caractérisé en ce que** la rainure de lubrification (HN, UN) est essentiellement prévue du côté non porteur.

3. Roulement coulissant selon la revendication 1 ou selon la revendication 2, **caractérisé en ce que** la rainure de lubrification (HN, UN) mène du côté engrenages (ZS) au côté joint d'étanchéité (DS).

4. Roulement coulissant selon l'une quelconque des revendications précédentes, **caractérisé en ce que** la rainure de lubrification (HN, UN) commence plus tôt du côté roue d'engrenages (ZS) que du côté joint d'étanchéité (DS) telle qu'elle est vue dans le sens de la rotation (DR).

5. Roulement coulissant selon l'une quelconque des revendications précédentes, **caractérisé en ce que** la section de la rainure de lubrification (HN, UN) diminue de façon constante de l'arrête d'entrée jusqu'à l'extrémité.

6. Roulement coulissant selon l'une quelconque des revendications précédentes, **caractérisé en ce qu'**un angle (α) situé entre l'axe du roulement coulissant (AL) et l'axe de la rainure de lubrification (AS) est inférieur à 45°, de préférence égal à 30°.

7. Roulement coulissant selon l'une quelconque des revendications précédentes, **caractérisé en ce que** la rainure de lubrification est constituée d'une rainure principale (HN) et d'une rainure de transition (UN), où la rainure de transition (UN) est disposée au niveau de l'arête d'entrée.

8. Roulement coulissant selon la revendication 7, **caractérisé en ce que** la rainure de transition (UN) et la rainure principale (HN) sont formées de manière cylindrique circulaire et **en ce qu'**une rainure tangente (TUN) à la rainure de transition (UN), en un point angulaire (E) entre la rainure de transition (UN) et l'enveloppe cylindrique (Z) de l'alésage du roulement coulissant, renferme avec un alésage tangent (TZ) à l'enveloppe cylindrique (Z) au point angulaire (E) un angle (β) qui au moins du côté roue d'engrenages est inférieur à 30°, de préférence inférieur à 15°.

9. Roulement coulissant selon la revendication 7 ou selon la revendication 8, **caractérisé en ce que** l'angle (β) diminue sur la largeur du roulement du côté roue d'engrenages (ZS) vers le côté joint d'étanchéité (DS).

10. Pompe à engrenages avec un roulement coulissant (GL) selon l'une quelconque des revendications 1 à 9 pour transporter des liquides hautement visqueux, en particulier des liquides cellulosiques.
